# EUROPÄISCHE PATENTSCHRIFT

(11) **EP 3 677 868 B1**
(45) Veröffentlichungstag und Bekanntmachung des Hinweises auf die Patenterteilung: **24.03.2021**
(21) Anmeldenummer: 19212221.6
(22) Anmeldetag: 28.11.2019
(51) Int. Cl.: G01B 11/06

(54) **HANDGEFÜHRTE VORRICHTUNG UND VERFAHREN ZUR OPTISCHEN BERÜHRUNGSFREIEN BESTIMMUNG DER DICKE EINES GEWALZTEN METALLBANDES**
HAND-HELD DEVICE AND METHOD FOR THE OPTICAL CONTACT-FREE DETERMINATION OF THE THICKNESS OF A ROLLED METAL STRIP
DISPOSITIF GUIDÉ À LA MAIN ET PROCÉDÉ POUR LA DÉTERMINATION OPTIQUE SANS CONTACT DE L'ÉPAISSEUR D'UNE BANDE MÉTALLIQUE LAMINÉE

(30) Priorität: 17.12.2018 DE 102018132461
(43) Veröffentlichungstag der Anmeldung: 08.07.2020
(73) Patentinhaber: Volas GmbH, 58093 Hagen (DE); Friedrich Vollmer Feinmessgerätebau GmbH, 58093 Hagen (DE)
(72) Erfinder: Krauhausen, Michael, 52066 Aachen (DE); Priem, Roland, 52074 Aachen (DE); Selent, Andreas, 58089 Hagen (DE); Winkelmann, Heinrich, 58285 Gevelsberg (DE)
(74) Vertreter: Ostriga Sonnet Wirths & Vorwerk

(56) Entgegenhaltungen:
- DE-A1-102009 060 905
- DE-A1-102013 017 288
- DE-B3-102016 100 745

## Beschreibung

Die Erfindung betrifft zunächst eine handgeführte Vorrichtung zur optischen berührungsfreien Bestimmung der Dicke eines gewalzten Metallbandes.

Eine derartige Vorrichtung ist aus dem Stand der Technik nicht bekannt.

Vorbekannt sind jedoch fest an den Walz- und Bandbearbeitungsanlagen angeordnete Messgeräte zur Bestimmung der Banddicke und zur automatischen Regelung der jeweiligen Bearbeitungsprozesse, die dem deutschen Patent 10 2016 100 745 B3 entsprechen. Dort wird ein Abstandsmessgerät beschrieben, welches mindestens eine Triangulations-Einrichtung und mindestens ein Mehrwellenlängen-Interferometer aufweist Weiterhin ist aus der deutschen Patentanmeldung 10 2009 060905 A1 eine handgeführte Vorrichtung zur Bestimmung der Banddicke bekannt, welche eine optische Sende- und Empfangsvorrichtung an jedem Ende eines Messbügels aufweist.

Darüber hinaus werden im Stillstand des Bandes auch Bügelmessschrauben oder Ultraschall-Dickenmessgeräte eingesetzt.

Letztlich ist es bei Anwendungen, bei denen sehr geringe Produktionstoleranzen eingehalten werden müssen, auch notwendig, Proben aus dem Bandmaterial auszuschneiden oder auszustanzen und diese in einem Messlabor unter definierten Bedingungen zu vermessen. In einem Messlabor werden entweder mechanisch antastende Systeme eingesetzt oder die sogenannte Gewichtsmethode angewendet.

Der vorgenannte Stand der Technik weist einerseits den Nachteil auf, dass er nur im absoluten Stillstand des gewalzten Metallbandes, wie zum Beispiel bei Bügelmessschrauben, angewendet werden kann und eine Messung auch bei langsamerer Transportgeschwindigkeit nicht möglich ist. Darüber hinaus unterliegt die Messung mit der Bügelmessschraube einem hohen Bedienereinfluss und bedingt somit große Messungenauigkeiten. Die Gewichtsmethode bedingt nicht nur das aufwendige Ausschneiden des Bandmaterials und eine spezielle Präparation der Probe, sondern auch die exakte Kenntnis der Materialdichte, welche nicht immer ausreichend genau bekannt ist.

Die Aufgabe der Erfindung besteht deshalb darin, eine handgeführte Vorrichtung zur optischen und berührungsfreien Bestimmung der Dicke eines gewalzten Metallbandes zu schaffen, mit der jederzeit ohne Vorbereitung auf einfache und schnelle Weise eine hochgenaue Messung möglich ist.

Die Aufgabe der Erfindung wird durch eine handgeführte Vorrichtung zur optischen und berührungsfreien Bestimmung der Dicke eines gewalzten Metallbandes gemäß des nachfolgenden Anspruches 1 gelöst:
Handgeführte Vorrichtung zur optischen berührungsfreien Bestimmung der Dicke eines gewalzten Metallbandes, dadurch gekennzeichnet, dass die Vorrichtung aus einem Gehäuse mit Handgriff gebildet ist, das Gehäuse mit einem C-förmigen Messbügel versehen ist, der einen Einführspalt für einen Randbereich eines gewalzten Metallbandes aufweist und beidseitig des Einführspaltes am Messbügel jeweils eine Einrichtung zur Abstandsmessung angeordnet ist, wobei die Einrichtung zur Abstandsmessung mindestens eine Triangulationseinrichtung und mindestens ein Mehrwellenlängen-Interferometer, eine Auswerte- und Steuereinheit, einen 3D-Beschleunigungsaufnehmer und ein zusätzliches Mehrwellenlängen-Interferometer zur Vermeidung von Messabweichungen bei thermischer Beeinflussung der Abmessungen des Messbügels sowie zur Kompensation von Brechungsindexänderungen im Einführspalt aufweist.

Die erfindungsgemäße Vorrichtung hat den wesentlichen Vorteil, dass mit ihr auf einfache Weise die Dicke von gewalzten Metallbändern mit einer Genauigkeit von besser als 0,5 µm ohne Entnahme von Bandproben und ohne Einfluss des Bedieners auf den Messprozess in wenigen Sekunden bestimmt werden kann.

Darüber hinaus ist eine Messung mit der erfindungsgemäßen handgeführten Vorrichtung nicht nur im Stillstand, sondern auch bei einer langsamen Bandbewegung, vorzugsweise mit einer Geschwindigkeit von 0 bis 20 m/min, welche noch die Sicherheit des Bedieners gewährleistet, möglich.
Bei einer vorteilhaften Ausführungsform der Erfindung ist der im Gehäuse angeordnete Messbügel zum Zwecke der zusätzlichen beidseitigen Rauigkeitsmessung quer zur Transportrichtung des gewalzten Metallbandes verfahrbar, wobei der Messbügel mit einem Wegmesssystem versehen ist und das Gehäuse gegenüberliegende im Aufnahmeschlitz angeordnete Bandandruckplatten aufweist, mit denen das Gehäuse am gewalzten Metallband klemmbefestigbar ist.

Für die Rauigkeitsmessung werden die Abstandsmesswerte, die auf jeder Seite des gewalzten Metallbandes erfasst werden, in Kombination mit den Positionswerten des verfahrbaren c-förmigen Messbügels ausgewertet. Die Verfahren zur Bestimmung der Rauigkeitskenngrößen sind in entsprechenden Normen, beispielsweise der DIN EN ISO 4287:2010-07, dokumentiert.

Diese bevorzugte erfindungsgemäße Ausführungsform weist den wesentlichen zusätzlichen Vorteil aus, dass mit ihr auch auf sehr einfache Weise und ohne Beeinflussung der Messwerte durch Bewegungen des Bedieners, eine Rauigkeitsmessung möglich ist, wobei hierzu lediglich während der Messung das Gehäuse mittels Bandandruckplatten mit möglichst geringer Kraft fest am gewalzten Metallband angeordnet wird und der Messbügel gegenüber dem Gehäuse verfahren wird.

Die vorgenannte Vorrichtung kann auch dadurch gekennzeichnet sein, dass das Wegmesssystem eine Auflösung von 0,1 µm aufweist und das die Rauigkeitsmessung eine Wegstrecke von mindestens 1,25 bis 6 mm auf der Oberfläche des gewalzten Metallbandes abgetastet wird.

Des Weiteren betrifft die Erfindung auch ein Verfahren zur optischen und berührungsfreien Bestimmung der Dicke eines gewalzten Metallbandes bei Stillstand beziehungsweise bei geringer Geschwindigkeit des Metallbandes mittels Einrichtung zur Abstandsmessung nach Anspruch 1, welche in einer handgeführten Vorrichtung mit einem Einführspalt für ein gewalztes Metallband angeordnet sind.

Ausgehend von dem vorgenannten Stand der Technik und der vorgenannten Aufgabe ist das erfindungsgemäße Verfahren durch folgende Merkmale gekennzeichnet:
a) Unter Zug setzen des gewalzten Metallbandes, damit die Oberfläche des gewalzten Metallbandes eine Ebene bildet.
b) Einführen des gewalzten Metallbandrandes in den Einführspalt der handgeführten Vorrichtung, wobei der Messabstand der Bandkante des gewalzten Metallbandes zum Ende des Einführspaltes 10 bis 100 mm beträgt.
c) Durchführung taumelnder Bewegungen der Vorrichtung in vertikaler und horizontaler Richtung während der Messung.
d) Zusammenfügen der Abstands- und der Beschleunigungsmesswerte.
e) Durchführung einer Bewegungsanalyse zum Erkennen des Zeitpunktes zu dem die handgeführte Vorrichtung senkrecht zur gewalzten Metallbandebene angeordnet ist.

Das erfindungsgemäße Verfahren hat den wesentlichen Vorteil, dass es bis zu einer Geschwindigkeit von 20 m/min auf einfache Weise eine hochgenaue Messung der Dicke eines gewalzten Metallbandes mittels einer handgeführten Vorrichtung ermöglicht.

Bei einem bevorzugten Verfahren wird durch nachfolgende zusätzliche Verfahrensschritte auch die Messung der Rauigkeit mit Hilfe einer handgeführten Vorrichtung möglich:
a) Unter Zug setzen des gewalzten Metallbandes, damit die Oberfläche des gewalzten Metallbandeseine Ebene bildet.
b) Anlegen der Bandandruckplatten an das zu messende gewalzte Metallband.
c) Bewegung des im Gehäuse verfahrbaren Messbügels parallel zur Bandoberfläche bei gleichzeitige Durchführung zahlreicher Abstandsmessungen.
d) Messung der Wegstrecke des Messbügels.
e) Ermittlung der Rauigkeit.

Das besonders bevorzugte Verfahren weist den wesentlichen Vorteil auf, dass ergänzend auch auf einfache Weise und relativ schnell mit der handgeführten Vorrichtung eine Messung der Rauigkeit möglich ist.

Weitere Vorteile der Erfindung ergeben sich aus der nachfolgenden Beschreibung eines Ausführungsbeispiels.

Es zeigen:
- Figur 1: eine teilweise schematische Darstellung eines Walzwerkes,
- Figur 2: einen schematischen Aufbau einer handgeführten Vorrichtung zur optischen berührungsfreien Bestimmung der Dicke und der Rauigkeit eines gewalzten Metallbandes in Seitenansicht,
- Figur 3: eine Draufsicht gemäß Ansichtspfeil III in Figur 2 auf die handgeführte Vorrichtung,
- Figur 4a: eine handgeführte Vorrichtung gemäß Figur 2 (ausschnittsweise) mit an dem gewalzten Metallband angelegte Bandandruckplatten zur Rauigkeitsmessung,
- Figur 4b: Draufsicht auf eine Bandandruckplatte und
- Figur 5 und 6: Darstellungen der Bewegungsabläufe während der Banddickenmessung.

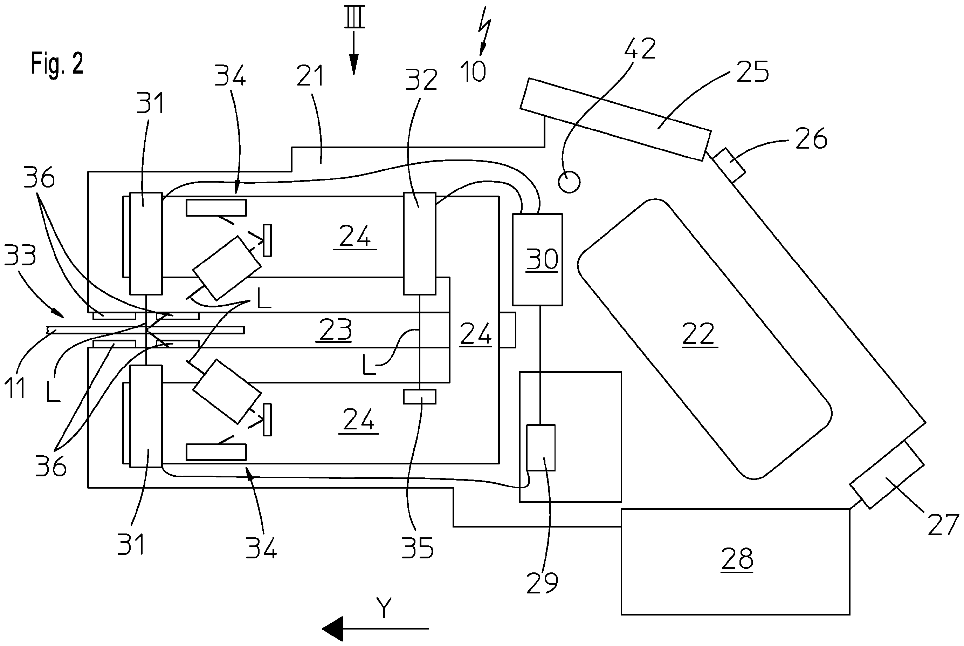

In den Figuren ist eine handgeführte Vorrichtung zur optischen berührungsfreien Dicke eines gewalzten Metallbandes insgesamt mit der Bezugsziffer 10 bezeichnet (s. Figur 2).

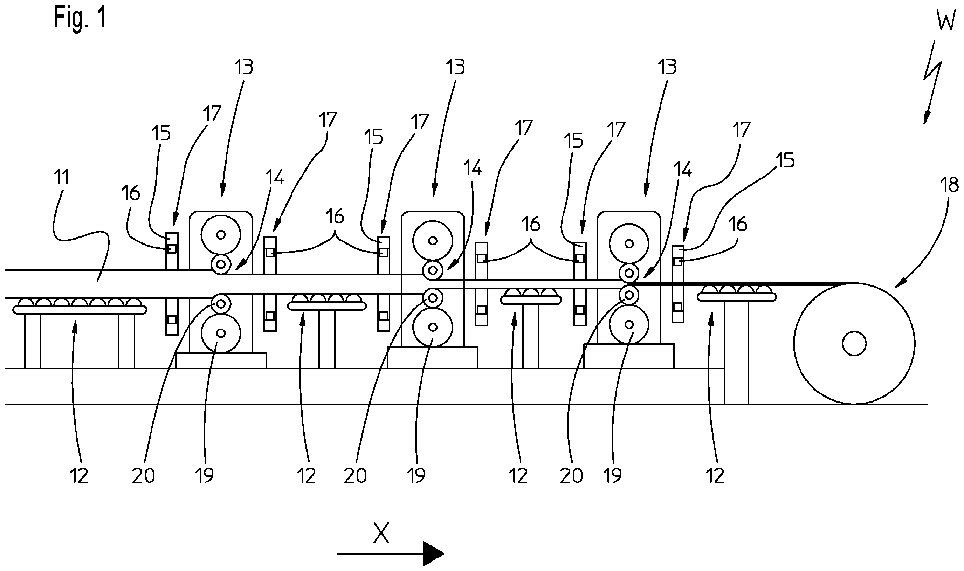

In der Figur 1 ist teilweise schematisch ein Walzwerk W dargestellt. Man erkennt, dass während des Walzprozesses ein gewalztes Metallband 11 in Transportrichtung x befördert wird. Das gewalzte Metallband 11 wird durch zahlreiche Rollenanordnungen 12 unterstützt und in x-Richtung bewegt, wobei zwischen den Rollenanordnungen 12 jeweils Walzgerüste 13 angeordnet sind, welche in Transportrichtung x jeweils einen sich verringernden Walzspalt 14 aufweisen. In Transportrichtung x vor und nach jedem Walzgerüst 13 sind an einem C-Rahmen 15 jeweils Laserabstandssensoren 16 eines Abstandsmessgerätes 17 angeordnet, mit denen Dickenunregelmäßigkeiten im gewalzten Metallband 11 vor dem Walzgerüst 13 beziehungsweise die Dicke des gewalzten Metallbandes 11 nach einem Walzvorgang in einem Walzgerüst 13 bestimmt werden.

Im vorliegenden Fall handelt es sich um einen dreistufigen Walzprozess an dessen Ende das dünne, gewalzte Metallbandendprodukt zu einem Coil 18 aufgerollt wird.

Letztlich erkennt man Walzgerüste 13 in zwei äußeren Stützwalzen 19 und zwei innere Arbeitswalzen 20, die den Walzspalt 14 definieren.

Über einen Regelkreis wird mit Hilfe durch das Abstandsmessgerät 17 gemessenen Dickenabweichungen die Breite des Walzspaltes 14 gesteuert.

In der Figur 2 ist die handgeführte Vorrichtung 10 zur optischen berührungsfreien Bestimmung der Dicke eines gewalzten Metallbandes 11 in schematischer Seitenansicht dargestellt.

Die handgeführte Vorrichtung 10 weist ein Gehäuse 21 auf, welches an seinem einen Ende eine Grifföffnung 22 und am anderen Ende mit einer Einführöffnung 33 eines Einführspaltes 23 für ein gewalztes Metallband 11 versehen ist. Ein C-förmiger Messbügel 24 umgreift den Einführspalt 23 oberseitig/unterseitig und stirnseitig (zur Grifföffnung 22 weisend). Der Messbügel 24 ist im Gehäuse 21 in y- und in Gegenrichtung verfahrbar angeordnet. Nahe der Grifföffnung 22 ist das Gehäuse 21 mit einem Display 25 einer Bedienungsleiste 26, einem Anschlussbauteil 27 für ein nicht dargestelltes Ladekabel sowie mit einer auswechselbaren Batterie/Akku 28 versehen.

Zwischen der Grifföffnung 22 und der Stirnseite des C-förmigen Messbügels 24 sind Laserquellen 29 für mindestens zwei Wellenlängen und eine Lichtwellenleiterführung 30 angeordnet, durch die die Lichtwellen einerseits zu zwei Mehrwellenlängen-Interferometersonden 31 und andererseits zu einem Interferometer 32 geleitet werden. Die Mehrwellenlängen-Referenzinterferometersonden 31 sind nahe einer Einführöffnung 33 des Einführspaltes 23 gegenüberliegend beidseitig des Einführspaltes 23 am Messbügel 24 angeordnet. Diese Mehrwellenlängen-Interferometersonden 31 dienen ebenso wie die des Weiteren beidseitig des Einführspaltes 23 gegenüberliegend angeordneten Triangulationsoptiken 34 zur hochgenauen Bestimmung der Dicke des gewalzten Metallbandes 11.

Der Vollständigkeitshalber wird darauf hingewiesen, dass zwischen den Mehrwellenlängen-Interferometersonden 31 und den Triangulationsoptiken 34 sowie dem gewalzten Metallband 11 Laserstrahlen L dargestellt sind, mit derer Hilfe die Messungen durchgeführt werden.

Zur Funktionsweise dieser Dickenmessvorrichtung wird auf das deutsche Patent 10 2016 100 745 B3 hingewiesen.

Zusätzlich ist in der handgeführten Vorrichtung 10 nahe der Stirnseite des Messbügels 24 dieses Mehrwellenlängen-Referenzinterferometer 32 auf der einen Seite des Einführspaltes 23 sowie ein gegenüberliegender Spiegel 35 angeordnet. Mit Hilfe dieses Mehrwellenlängen-Referenzinterferometers 32 (zur Funktionsweise s. ebenso DE 10 2016 100 745 B3) sowie des Spiegels 35 wird die thermische Ausdehnung des Messbügels 24 beziehungsweise die Änderung des Brechungsindexes im Einführspalt 23 festgestellt und im Zusammenhang mit den Dickenmessungen zur Vermeidung von Abweichungen berücksichtigt.

Des Weiteren ist im Gehäuse 21 ein dreiachsig ausgebildeter Beschleunigungsaufnehmer 42 angeordnet, dessen Funktion später beschrieben wird.

Darüber hinaus sind am Gehäuse 21 der handgeführten Vorrichtung 10 beidseitig des Einführspaltes 23 für das gewalzte Metallband 11 jeweils eine Bandandruckplatte 36 angeordnet, die in Richtung des Einführspaltes 23 ein- und ausgefahren werden kann. Die Bandandruckplatten 36 dienen zur zeitweisen, festen Anordnung des Gehäuses 21 der handgeführten Vorrichtung 10 am gewalzten Metallband 11, während einer nachfolgend noch beschriebenen Messung der Rauigkeit des gewalzten Metallbandes 11.

Letztlich hat die Vorrichtung 10 bei einer Höhe von ca. 180 mm, einer Länge von ca. 350 mm und einer Breite von 50 - 60 mm ein Gewicht von ca. 1,5 kg.

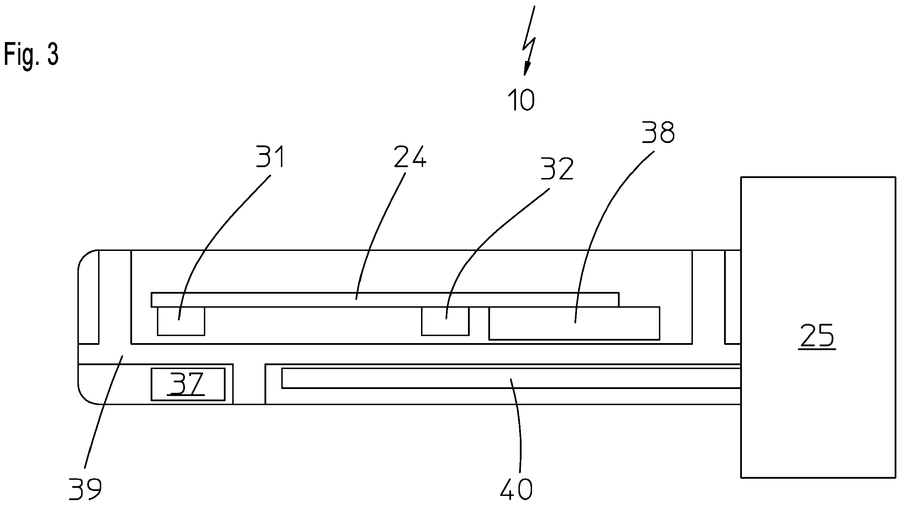

In der Figur 3 ist des Weiteren noch eine Draufansicht auf die handgeführte Vorrichtung 10 gemäß Figur 2 dargestellt.

Man erkennt in dieser Figur 3 zusätzlich eine Antriebseinrichtung 37 für die Bandandruckplatten 36, eine Antriebseinrichtung 38 für die Verstellung des Messbügels 24 in y-Richtung, einen Aluminiumgrundrahmen 39 des Gehäuses 21 sowie eine Auswerte- und Steuereinheit 40.

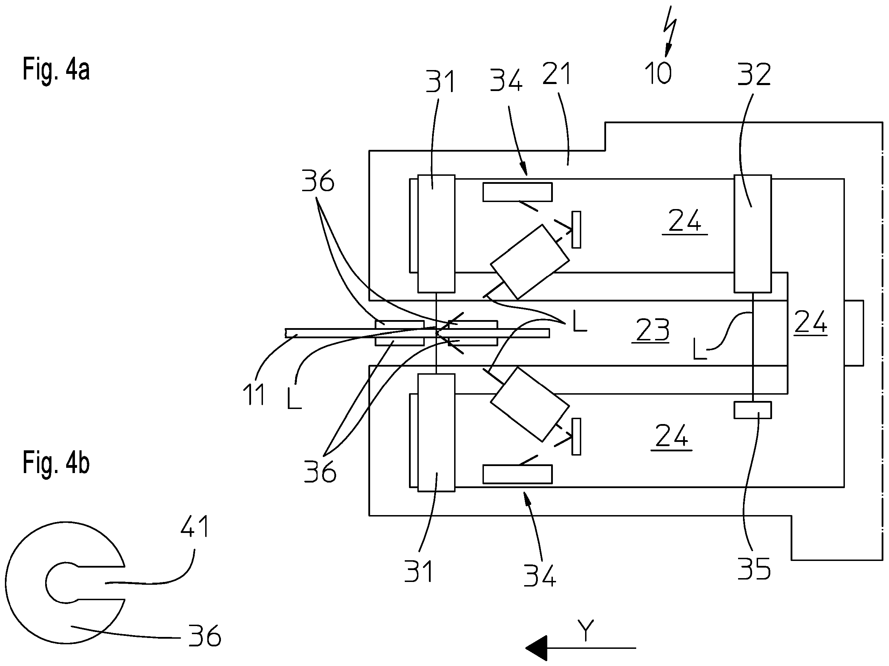

In der Figur 4a ist die handgeführte Vorrichtung gemäß Figur 2 noch einmal ausschnittsweise dargestellt, wobei in diesem Fall jedoch das Gehäuse 21 mittels der Bandandruckplatten 36 während einer Rauigkeitsmessung fest am gewalzten Metallband 11 angeordnet ist.

Eine Draufsicht auf eine Bandandruckplatte 36 ist ergänzend noch in der Figur 4b zu erkennen. Diese Darstellung 4b zeigt, dass jede Bandandruckplatte 36 in der Draufsicht einen Schlitz 41 für den Strahlengang der Triangulationsoptiken 34 aufweist.

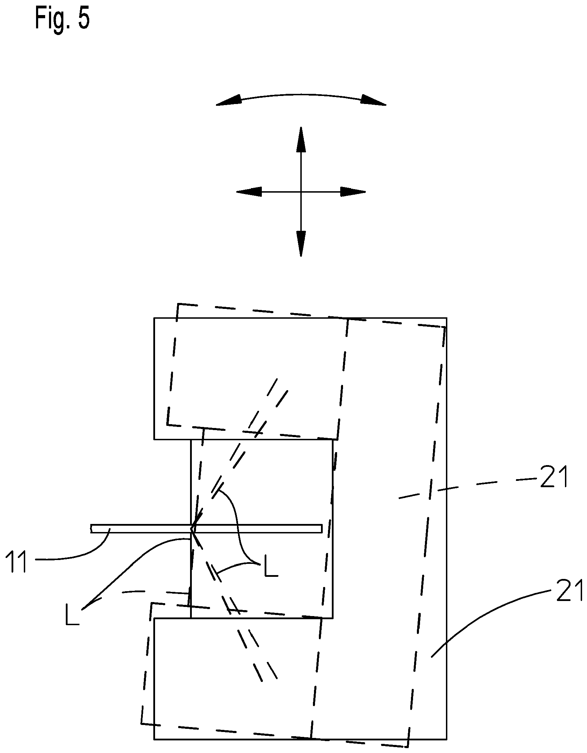

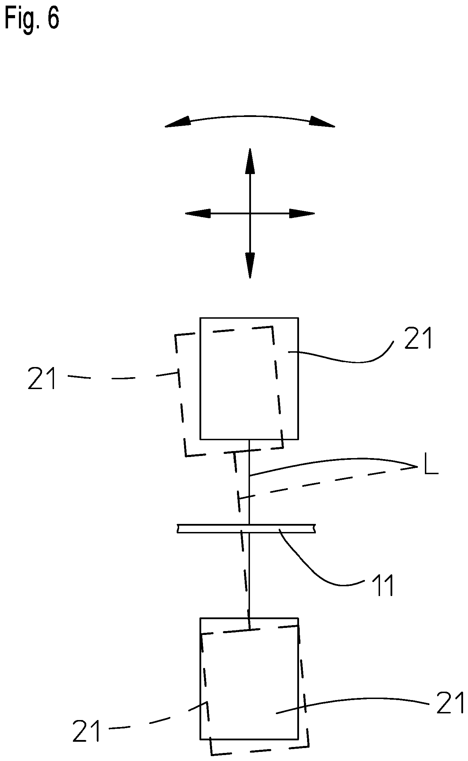

Letztlich sind in den Figur 5 und 6 noch schematisch Bewegungsabläufe der handgeführten Vorrichtung 10 während der Banddickenmessung dargestellt, die im Zusammenhang mit der nachfolgenden Beschreibung einer Banddickenmessung noch erläutert werden.

Die handgeführte Vorrichtung 10 zur Dickenmessung sowie zur Rauigkeitsmessung stellt im Hinblick auf die Banddickenmessung eine Vorrichtung dar, mit der zusätzlich zu den festinstallierten Inlinemessgeräten zur Bestimmung der Banddicke und zur automatischen Regelung des Walzprozesses in allen Produktionslinien Kontrollmessungen durchgeführt werden. So kann das Gerät zur Messung der Dicke des gewalzten Metallbandes 11 vor Beginn einer Walzung, während eines Walzprozesses oder auch am Ende des Walzprozesses eingesetzt werden. Auch an Streckrichtbiegeanlagen, Längsteilanlagen, Walz- und Glühlinien, Beschichtungsanlagen, Querteilanlagen und Stanzanlagen sind auf schnelle und einfache Weise jederzeit Kontrollmessungen möglich.

Für die Durchführung einer Dickenmessung wird die handgeführte Vorrichtung 10 so dem stillstehenden oder maximal 20 m/min sich bewegenden, gewalzten Metallbandes 11 angenähert, dass das gewalzte Metallband 11 bis zu maximal 80 mm in den Einführspalt 23 des Gehäuses 21 eintaucht. Während der nur wenige Sekunden dauernden Dickenmessung, in der mehrere zehntausende Messwerte pro Sekunde erfasst werden, muss die handgeführte Vorrichtung 10 "taumelnde" Bewegungen in alle Richtungen durchführen, die von dem mehrachsigen Beschleunigungsaufnehmer 42 erfasst werden.

Der mehrachsige Beschleunigungsaufnehmer 42 erfasst die Bewegung des Handgerätes 10 während der zahlreichen Messungen. Erst durch die Kombination aus Abstandsmesswerten und den Bewegungsdaten kann die Dicke des gewalzten Metallbandes 11 bestimmt werden. Auch durch entsprechende Anzeigen am Display 25 des Gehäuses 21 wird der Bediener gezwungen die handgeführte Vorrichtung 10 plus/minus 2 Grad in alle Richtungen zu bewegen, so dass man sicher sein kann das der Bediener auch für eine gewisse Zeit Dickenmessungen senkrecht zur Bandoberfläche durchgeführt hat. Erst wenn das Ergebnis der Bewegungsanalyse feststeht, wird ein Messwert angezeigt.

In den Figuren 5 und 6 sind diese vorgenannten "taumelnden" Bewegungen der handgeführten Vorrichtung 10 in alle Richtungen schematisch skizziert.

Des Weiteren bietet die handgeführte Vorrichtung 10 die Möglichkeit die Rauigkeit des gewalzten Metallbandes 11 zu messen. Hierfür muss, wie in der Figur 4a dargestellt, zunächst die handgeführte Vorrichtung 10 mittels der am Gehäuse 21 angeordneten Bandandruckplatten 36 am gewalzten Metallband 11 befestigt werden. Konkret wird über eine Bedientaste der Bedienungsleiste 26 die Vorrichtung 10 mittels der Bandandruckplatten 36 am gewalzten Metallband 11 fixiert. Aufgrund dieser Anordnung des Gehäuses 21 am gewalzten Metallband 11 kann die Rauigkeitsmessung nur am stillstehenden, gewalzten Metallband11 durchgeführt werden.

Während der Rauigkeitsmessung wird der Messbügel 24 in y-Richtung innerhalb und relativ zu dem Gehäuses 21 bewegt, so dass während der Rauigkeitsmessung ein bestimmter Bereich des gewalzten Metallbandes 11 durch die Messvorrichtungen 31 abgetastet werden kann.

Die typische Weglänge des Messbügels 24 relativ zur Bandoberfläche beträgt 1,25 bis 6 mm, wobei der Weg in entsprechenden Normen festgelegt ist. Während dieses Messweges werden viele tausend einzelne Abstandsmesswerte aufgezeichnet und entsprechend den gültigen Normen gefiltert, damit die typischen Kenngrößen Rₐ und R_{z} bestimmt werden können.

Der erfindungsgemäße Vorteil der handgeführten Vorrichtung 10 in Bezug auf die Rauigkeitsmessung besteht darin, dass man gleichzeitig die Rauigkeit an der Ober- und Unterseite des gewalzten Metallbandes 11 bestimmen kann. Während konventionelle Geräte nur auf das Band aufgesetzt werden können und man mit diesen an der Unterseite nicht durchführen kann.

Letztlich ist eine Verfälschung des Ergebnisses der Rauigkeitsmessung durch Wackelbewegungen ausgeschlossen, da die handgeführte Vorrichtung 10 über die Bandandrucksplatten 36 fest mit dem gewalzten Metallband 11 verbunden ist.

### Bezugszeichenliste:

- 10: handgeführte Vorrichtung
- 11: gewalztes Metallband
- 12: Rollenanordnungen
- 13: Walzgerüste
- 14: Walzspalt
- 15: C-Rahmen
- 16: Laserabstandssensoren
- 17: Abstandsmessgerät
- 18: Coil
- 19: Stützwalzen
- 20: Innere Arbeitswalzen
- 21: Gehäuse
- 22: Grifföffnung
- 23: Einführspalt
- 24: C-förmiger Messbügel
- 25: Display
- 26: Bedienungsleiste
- 27: Anschlussbauteil Ladekabel
- 28: Batterie/Akku
- 29: Laserquellen
- 30: Lichtwellenleiterführung
- 31: Mehrwellenlängen-Interferometersonden
- 32: Mehrwellenlängen-Referenzinterferometer
- 33: Einführöffnung
- 34: Triangulationsoptiken
- 35: Spiegel von 32
- 36: Bandandruckplatten
- 37: Antriebseinrichtung von 36
- 38: Antriebseinrichtung von 24
- 39: Aluminiumgrundrahmen von 21
- 40: Auswerte- und Steuereinheit
- 41: Schlitz von 36
- 42: Beschleunigungsaufnehmer

- L: Laserstrahlen
- W: Walzwerk
- X: Transportrichtung
- Y: Verstellrichtung Messbügel 24

## Patentansprüche

1. Handgeführte Vorrichtung (10) zur optischen und berührungsfreien Bestimmung der Dicke eines gewalzten Metallbandes (11), wobei die Vorrichtung (10) aus einem Gehäuse (21) mit Handgriff gebildet ist, das Gehäuse (21) mit einem C-förmigen Messbügel (24) versehen ist, der einen Einführspalt (23) für einen Randbereich eines gewalzten Metallbandes (11) aufweist und beidseitig des Einführspaltes (23) am Messbügel (24) jeweils eine Einrichtung (31) zur Abstandsmessung angeordnet ist, wobei die Einrichtung (31) zur Abstandsmessung mindestens eine Triangulationseinrichtung (34) und eine Auswerte- und Steuereinheit (40) aufweist, **dadurch gekennzeichnet, dass** die Einrichtung (31) zusätzlich mindestens ein Mehrwellenlängen-Interferometer (31), einen 3D-Beschleunigungsaufnehmer (42) und ein zusätzliches Mehrwellenlängen-Interferometer (32) zur Vermeidung von Messabweichungen bei thermischer Beeinflussung der Abmessungen des Messbügels (24) sowie zur Kompensation von Brechungsindexänderungen im Einführspalt (23) aufweist.

2. Handgeführte Vorrichtung (10) nach Anspruch 1, **dadurch gekennzeichnet, dass** der im Gehäuse (21) angeordnete Messbügel (24) zum Zwecke der zusätzlichen beidseitigen Rauigkeitsmessung quer zur Transportrichtung des gewalzten Metallbandes (11) verfahrbar ist, wobei der Messbügel (24) mit einem Wegmesssystem versehen ist, und dass Gehäuse (21) gegenüberliegende, im Einführspalt (23) angeordnete Bandandruckplatten (36) aufweist, mit dem das Gehäuse (21) am gewalzten Metallband (11) klemmbefestigbar ist.

3. Handgeführte Vorrichtung (10) nach Anspruch 2, **dadurch gekennzeichnet, dass** das Wegmesssystem eine Auflösung von 0,1 µm aufweist und dass die Rauigkeitsmessung eine Wegstrecke von mindestens 1,25 bis 6 mm auf der Oberfläche des gewalzten Metallbandes (11) abgetastet wird.

4. Verfahren zur optischen und berührungsfreien Bestimmung der Dicke eines gewalzten Metallbandes (11) bei Stillstand beziehungsweise bei geringer Geschwindigkeit des gewalzten Metallbandes (11) mittels Einrichtungen (31, 32 und 34) zur Abstandsmessung nach Anspruch 1, welche in einer handgeführten Vorrichtung (10) mit einem Einführspalt (23) für ein gewalztes Metallband (11) angeordnet sind, mit folgenden Verfahrensschritten:
a.) Unter Zug setzen des gewalzten Metallbandes (11), damit die Oberfläche des gewalzten Metallbandes (11) eine Ebene bildet.
b.) Einführen des gewalzten Metallbandrandes in den Einführspalt (23) der handgeführten Vorrichtung (10), wobei der Messabstand der Bandkante des gewalzten Metallbandes (11) zum Ende des Aufnahmeschlitzes 10 bis 100 mm beträgt.
c.) Durchführung taumelnder Bewegungen der Vorrichtung (10) in vertikaler und horizontaler Richtung während der Messung.
d.) Zusammenfügen der Abstands- und der Beschleunigungsmesswerte.
e.) Durchführung einer Bewegungsanalyse zum Erkennen des Zeitpunktes zu dem die handgeführte Vorrichtung (10) senkrecht zur gewalzten Metallbandebene angeordnet ist.

5. Verfahren zur Messung der Rauigkeit eines gewalzten Metallbandes (11) mit einer handgeführten Vorrichtung (10) gemäß Anspruch 2 während des Stillstandes des gewalzten Metallbandes (11), **gekennzeichnet durch** folgende Verfahrensschritte:
a.) Unter Zug setzen des gewalzten Metallbandes (11), damit die Oberfläche des gewalzten Metallbandes (11) eine Ebene bildet
b.) Anlegen der Bandandruckplatten (36) an das zu messende gewalzte Metallband (11)
c.) Bewegung des im Gehäuse (21) verfahrbaren Messbügels (24) parallel zur Bandoberfläche bei gleichzeitige Durchführung zahlreicher Abstandsmessungen
d.) Messung der Wegstrecke des Messbügels (24)
e.) Ermittlung der Rauigkeit.

## Claims

1. Hand-held device (10) for the optical and contact-free determination of the thickness of a rolled metal strip (11), the device (10) being formed by a housing (21) with a handle, the housing (21) being provided with a C-shaped measuring frame (24) having an insertion gap (23) for a peripheral region of a rolled metal strip (11), and a distance measuring device (31) is disposed on the measuring frame (24) respectively on either side of the insertion gap (23), the distance measuring device (31) having at least one triangulation device (34) and an evaluation and control unit (40), **characterised in that** the device (31) further comprises at least one multiwavelength interferometer (31), a 3D acceleration sensor (42) and an additional multiwavelength interferometer (32) for preventing measuring errors due to the influence of heat on the dimensions of the measuring frame (24) and to compensate for changes in the refractive index in the insertion gap (23).

2. Hand-held device (10) as claimed in claim 1, **characterised in that** the measuring frame (24) disposed in the housing (21) is displaceable transversely to the transport direction of the rolled metal strip (11) for the purpose of taking an additional double-sided roughness measurement, the measuring frame (24) being provided with a distance measuring system, and the housing (21) comprises oppositely lying strip clamping plates (36) disposed in the insertion gap (23) by means of which the housing (21) can be clamped on the rolled metal strip (11).

3. Hand-held device (10) as claimed in claim 2, **characterised in that** the distance measuring system has a resolution of 0.1 µm and the roughness measurement is scanned across a travel distance of at least 1.25 to 6 mm on the surface of the rolled metal strip (11).

4. Method for the optical and contact-free determination of the thickness of a rolled metal strip (11) whilst stationary and/or at a low speed of the rolled metal strip (11) by means of devices (31, 32 and 34) for taking a distance measurement as claimed in claim 1, which are disposed in a hand-held device (10) having an insertion gap (23) for a rolled metal strip (11), comprising the following method steps:
a) placing the rolled metal strip (11) under tension so that the surface of the rolled metal strip (11) forms a plane,
b) inserting the rolled metal strip edge in the insertion gap (23) of the hand-held device (10), the measurement distance of the strip edge of the rolled metal strip (11) to the end of the receiving slot being 10 to 100 mm,
c) effecting twisting movements of the device (10) in the vertical and horizontal direction during the measurement,
d) combining the distance and acceleration measurement values,
e) running a motion analysis in order to detect the instant at which the hand-held device (10) is disposed perpendicular to the rolled metal strip plane.

5. Method for measuring the roughness of a rolled metal strip (11) using a hand-held device (10) as claimed in claim 2 whilst the rolled metal strip (11) is stationary, **characterised by** the following method steps:
a) placing the rolled metal strip (11) under tension so that the surface of the rolled metal strip (11) forms a plane,
b) placing the strip clamping plates (36) against the rolled metal strip (11) to be measured,
c) moving the measuring frame (24) displaceably mounted in the housing (21) parallel with the strip surface whilst simultaneously running a number of distance measurements,
d) measuring the travel distance of the measuring frame (24) ,
e) determining the roughness.

## Revendications

1. Dispositif guidé à la main (10) pour la détermination optique et sans contact de l'épaisseur d'une bande métallique laminée (11), lequel dispositif (10) étant formé d'un boîtier (21) avec poignée, le boîtier (21) étant doté d'un étrier de mesure en forme de C (24) qui présente une fente d'insertion (23) pour une zone de bord d'une bande de métal laminée (11) et un système (31) de mesure de distance étant disposé de part et d'autre de la fente d'insertion (23) sur l'étrier de mesure (24), le système (31) de mesure de distance présentant au moins un système de triangulation (34) et une unité d'évaluation et de commande (40), **caractérisé en ce que** le système (31) présente en outre au moins un interféromètre à longueurs d'onde multiples (31), un accéléromètre 3D (42) et un interféromètre à longueurs d'onde multiples (32) supplémentaire pour éviter les écarts de mesure en cas d'influence thermique des mesures de l'étrier de mesure (24) ainsi que pour compenser les variations d'indice de réfraction dans la fente d'insertion (23).

2. Dispositif guidé à la main (10) selon la revendication 1, **caractérisé en ce que** l'étrier de mesure (24) disposé dans le boîtier (21) peut être déplacé pour permettre la mesure de rugosité supplémentaire de part et d'autre perpendiculairement à la direction de transport de la bande de métal laminée (11), dans lequel l'étrier de mesure (24) est doté d'un système de mesure de déplacement, et que le boîtier (21) présente des plaques de pressage de bande (36) disposées face à face dans la fente d'insertion (23) afin que le boîtier (21) puisse être fixé par serrage sur la bande métallique laminée (11).

3. Dispositif guidé à la main (10) selon la revendication 2, **caractérisé en ce que** le système de mesure de déplacement présente une précision de 0,1 µm et que la mesure de rugosité est échantillonnée sur une distance de déplacement d'au moins 1,25 à 6 mm sur la surface de la bande métallique laminée (11).

4. Procédé pour la détermination optique et sans contact de l'épaisseur d'une bande métallique laminée (11) à l'arrêt ou d'une bande métallique laminée (11) avançant à faible vitesse au moyen de systèmes (31, 32 et 34) de mesure de distance selon la revendication 1 qui sont disposés dans un dispositif guidé à la main (10) avec une fente d'insertion (23) pour une bande métallique laminée (11), avec les étapes de procédé suivantes :
a.) mise en tension de la bande métallique laminée (11) afin que la surface de la bande métallique laminée (11) forme un plan,
b.) insertion du bord de la bande métallique laminée dans la fente d'insertion (23) du dispositif guidé à la main (10), la distance de mesure de l'arête de la bande métallique laminée (11) à l'extrémité de la fente de réception étant de 10 à 100 mm,
c.) exécution de mouvements d'oscillation du dispositif (10) dans les directions verticale et horizontale pendant la mesure,
d.) assemblage des valeurs de mesure de distance et d'accélération,
e.) réalisation d'une analyse de mouvement pour déceler le moment où le dispositif guidé à la main (10) est disposé perpendiculairement au plan de la bande métallique laminée.

5. Procédé pour mesurer la rugosité d'une bande métallique laminée (11) avec un dispositif guidé à la main (10) selon la revendication 2 pendant l'arrêt de la bande métallique laminée (11), **caractérisé par** les étapes de procédé suivantes :
a.) mise en tension de la bande métallique laminée (11) afin que la surface de la bande métallique laminée (11) forme un plan,
b.) application des plaques de pressage de bande (36) sur la bande métallique laminée (11) à mesurer,
c.) déplacement de l'étrier de mesure (24) mobile dans le boîtier (21) parallèlement à la surface de la bande tout en effectuant de nombreuses mesures de distance,
d.) mesure de la distance de déplacement de l'étrier de mesure (24),
e.) détermination de la rugosité.
